# EUROPEAN PATENT SPECIFICATION

(11) **EP 4 549 043 B1**
(45) Date of publication and mention of the grant of the patent: **19.08.2026**
(21) Application number: 23859704.1
(22) Date of filing: 19.04.2023
(51) Int. Cl.: G06F 30/20, G06F 30/17, B21D 22/20, B21D 22/24, B21D 53/88, G06F 113/24, G06F 119/14

(54) **PRESS-FORMED PRODUCT MANUFACTURING METHOD**
VERFAHREN ZUR HERSTELLUNG EINES PRESSGEFORMTEN PRODUKTS
PROCÉDÉ DE FABRICATION DE PRODUIT FORMÉ À LA PRESSE

(30) Priority: 29.08.2022 JP 2022135509
(43) Date of publication of application: 07.05.2025
(73) Proprietor: JFE Steel Corporation, Tokyo 100-0011 (JP)
(72) Inventor: IIZUKA, Eiji, Tokyo 100-0011 (JP)
(74) Representative: Grünecker Patent- und Rechtsanwälte PartG mbB
(86) International application number: PCT/JP2023/015563
(87) International publication number: WO 2024/047933

(56) References cited:
- EP-A1- 3 912 743
- WO-A1-2020/149381
- JP-A- 2005 081 417
- JP-A- 2017 177 150
- JP-A- 2019 002 834
- JP-A- 2020 127 959
- JP-A- H0 377 728
- JP-A- S6 247 504
- JP-B2- 6 658 465
- PARK KEECHEOL ET AL: "Effects of blank curvature and tool conditions on the spring back of thin sheet panel formed through local embossing and edge L-bending", vol. 1383, 22 August 2011 (2011-08-22), pages 1115 - 1120, XP093296395, ISBN: 978-0-7354-0949-1, Retrieved from the Internet <URL:https://watermark.silverchair.com/1115_1_online.pdf?token=AQECAHi208BE49Ooan9kkhW_Ercy7Dm3ZL_9Cf3qfKAc485ysgAAAygwggMkBgkqhkiG9w0BBwagggMVMIIDEQIBADCCAwoGCSqGSIb3DQEHATAeBglghkgBZQMEAS4wEQQMUImaXOjjcjqxswmeAgEQgIIC24vTg6LW7YgtoAkVerg3XjmldOWy1tmPnLKpil_4rjjPxTsGGizg5-OGtFXqyORphDJd3AxDHM-qyY9jLXiWCv> DOI: 10.1063/1.3623728
- HIRAMOTO JIRO ET AL: "Improvement of Shape Accuracy in Press-Formed Parts of High-Strength Steel by Springback-Root-Cause Analysis", vol. 725, 15 December 2016 (2016-12-15), pages 610 - 615, XP055890586, Retrieved from the Internet <URL:https://www.scientific.net/KEM.725.610.pdf> DOI: 10.4028/www.scientific.net/KEM.725.610

## Description

### Field

The present invention relates to a press formed part manufacturing method for reducing an influence of shape variation of a blank in a press formed part obtained by press forming the blank collected from a metal sheet having shape variation.

### Background

In the progress of improvement of collision safety of an automobile body due to tightening of a collision safety standard of an automobile, weight reduction of the automobile body is also required in order to improve fuel consumption of the automobile due to recent carbon dioxide emission regulations. In order to achieve both the collision safety performance and the weight reduction of the vehicle body, a metal sheet having higher strength than the conventional metal sheet is being used in the vehicle body.

In the related art, an actual metal sheet from which a blank for obtaining a press formed part is collected is not completely flat, but has a wavy shape (shape variation). Therefore, the actual blank collected from the metal sheet is not necessarily flat as well and may have shape variations. PARK KEECHEOL ET AL: "Effects of blank curvature and tool conditions on the spring back of thin sheet panel formed through local embossing and edge L-bending" discloses analysis of non-flat blanks.

When a metal sheet having such shape variation is used as a blank and press formed as a vehicle body component, a press formed part obtained after press forming may deviate from a target dimensional accuracy due to the influence of the shape variation.

For example, Patent Literature 1 and Patent Literature 2 disclose techniques for selecting and removing a press formed part deviating from a target dimensional accuracy for the press formed part after press forming. Patent Literatures 3 and 4 disclose means for providing unevenness to the surface of a tool of press forming.

### Citation List

### Patent Literature

Patent Literature 1: JP 62-047504 A
Patent Literature 2: JP 2019-002834 A
Patent Literature 3: JP 2020-127959 A
Patent Literature 4: JP 03-077728 A

### Summary

### Technical Problem

The techniques disclosed in Patent Literature 1 and Patent Literature 2 compare shapes of press formed parts after press forming to identify a portion having poor dimensional accuracy. In the techniques disclosed in Patent Literature 1 and Patent Literature 2, it is not identified which portion of the press formed part is susceptible to the influence of the shape variation of the blank due to the shape variation of the blank before the press forming, and it is difficult to take measures.

Further, the blank used for press forming is collected by punching or shearing a metal sheet such as a steel sheet. Therefore, when a plurality of blanks is collected from a metal sheet having a shape variation, the collection positions are different, so that even in the case of blanks collected from the same metal sheet, the individual blanks have different portions exhibiting unevenness. Therefore, in order to reduce the influence of the shape variation of the blank, it is necessary to take measures in consideration of the difference in the shape variation of each blank.

In the technique disclosed in Patent Literature 3, unevenness is provided to the surface of the tool to hold oil between the tool and the blank during press forming, and friction between the tool and the blank is suppressed to facilitate forming. In addition, the technique disclosed in Patent Literature 4 makes it possible to manufacture a metal sheet having high designability by providing unevenness to the surface of a tool. Therefore, the techniques disclosed in Patent Literatures 3 and 4 do not reduce the influence of the shape variation of the blank intended by the present invention.

The present invention has been made in view of the above problems, and an object of the present invention is to provide a press formed part manufacturing method that reduces the influence of the shape variation of a blank in a press formed part obtained by press forming a blank collected from a metal sheet having a shape variation. Solution to Problem

To solve the problem and achieve the object, (1) a press formed part manufacturing method according to the present invention is the method for reducing an influence of a shape variation of a blank in a press formed part obtained by press forming the blank collected from a metal sheet having a shape variation. The method includes: a reference press formed part shape acquisition step of performing press forming analysis when press forming is performed with a predetermined tool model using a flat blank model having a flat shape, and acquiring a press formed part shape after tool release as a reference press formed part shape; a wave-shaped blank press formed part shape acquisition step of generating a wave-shaped blank model having a wave shape with a predetermined wavelength and a predetermined amplitude corresponding to the shape variation, performing press forming analysis when press forming is performed with the predetermined tool model using the generated wave-shaped blank model, and acquiring a press formed part shape after tool release as a wave-shaped blank press formed part shape; a first amount of deviation acquisition step of comparing the reference press formed part shape with the wave-shaped blank press formed part shape to obtain a portion where both shapes are deviated from each other and an amount of deviation; a periodically deviated wave-shaped blank press formed part shape acquisition step of generating one type or a plurality of types of periodically deviated wave-shaped blank models each having a wave shape whose amplitude and wavelength are the same as an amplitude and a wavelength of a wave shape of the wave-shaped blank model and whose period is deviated from a period of the wave shape of the wave-shaped blank model, performing press forming analysis when press forming is performed with the predetermined tool model using the generated periodically deviated wave-shaped blank models, and acquiring a press formed part shape after tool release as a periodically deviated wave-shaped blank press formed part shape; a second amount of deviation acquisition step of comparing the reference press formed part shape with one type or a plurality of types of the periodically deviated wave-shaped blank press formed part shapes to obtain a portion where both shapes are deviated from each other and an amount of deviation; a countermeasure required portion identification step of identifying, as a countermeasure required portion, a portion of the press formed part corresponding to a portion where an amount of deviation exceeding a threshold value has occurred in the first amount of deviation acquisition step and a portion where an amount of deviation exceeding a threshold value has occurred in the second amount of deviation acquisition step; a protrusion pattern providing step of providing a protrusion pattern to a portion, of an upper tool and a lower tool of an actual tool for forming the press formed part, for forming the countermeasure required portion or the countermeasure required portion and a periphery thereof; and an actual press forming step of press forming the blank using the upper tool and the lower tool provided with the protrusion pattern.

(2) Moreover, in the press formed part manufacturing method according to above (1), the first amount of deviation acquisition step may include acquiring, as the amount of deviation, a difference between a spring back amount at a predetermined portion in the reference press formed part shape and a spring back amount at a portion same as the predetermined portion in the reference press formed part shape in the wave-shaped blank press formed part shape, and the second amount of deviation acquisition step may include acquiring, as the amount of deviation, a difference between a spring back amount at a predetermined portion in the reference press formed part shape and a spring back amount at a portion same as the predetermined portion in the reference press formed part shape in the periodically deviated wave-shaped blank press formed part shape.

(3) Moreover, in the press formed part manufacturing method according to above (1) or (2), the protrusion pattern may include a plurality of protrusions formed at predetermined intervals on a flat face or a curved face, a length A of each of a vertical length and a horizontal length of each of the protrusions may be set to 3 mm or more and 50 mm or less, and a distance between adjacent protrusions may be set to 1.2A or more and 2.0A or less, the protrusion pattern providing step may include providing the upper tool and the lower tool with the protrusion pattern so that a protrusion of the upper tool faces a flat face or a curved face of the lower tool and a protrusion of the lower tool faces a flat face or a curved face of the upper tool, and the actual press forming step may include performing press forming so that a distance between a lower face of the protrusion of the upper tool and an upper face of the protrusion of the lower tool at a bottom dead center when the blank having a sheet thickness t (mm) is formed is 0.1 t or more and 0.5 t or less. Advantageous Effects of the Invention

In the press formed part manufacturing method according to the present invention, it is possible to reduce the influence of the shape variation of the blank by identifying a portion, of the blank, where influence of the shape variation of the press formed part is large and taking measures for the portion in consideration of the difference in the shape variation of the individual blank. As a result, in the press formed part manufacturing method according to the present invention, a press formed part with good dimensional accuracy can be produced, and a press formed part with good dimensional accuracy can be produced with good yield even when a blank collected from a metal sheet having a shape variation is used.

### Brief Description of Drawings

FIG. 1 is an explanatory view of each step of a press formed part manufacturing method according to an embodiment.
FIG. 2 is an external view of a component targeted in the embodiment.
FIG. 3 is an explanatory diagram of a flat blank model.
FIG. 4 is a diagram illustrating a reference press formed part shape obtained by performing press forming analysis using the flat blank model of FIG. 3 and an amount of change from a bottom dead center in each portion of the shape.
FIG. 5 is an explanatory diagram of a wave-shaped blank model.
FIG. 6 is a diagram illustrating a wave-shaped blank press formed part shape obtained by performing press forming analysis using the wave-shaped blank model of FIG. 5 and an amount of change from a bottom dead center in each portion of the shape.
FIG. 7 is a diagram illustrating a first amount of deviation when the reference press formed part shape in FIG. 4 is compared with the wave-shaped blank press formed part shape in FIG. 6.
FIG. 8 is an explanatory diagram of a periodically deviated wave-shaped blank model having a wave shape whose amplitude and wavelength are the same as those of the wave shape of the wave-shaped blank model in FIG. 5 and whose period is deviated from that of the wave-shaped blank model in FIG. 5 by 1/4 wavelength.
FIG. 9 is a diagram illustrating a periodically deviated wave-shaped blank press formed part shape obtained by performing press forming analysis using the periodically deviated wave-shaped blank model of FIG. 8 and an amount of change from a bottom dead center in each portion of the shape.
FIG. 10 is a diagram illustrating a second amount of deviation when the reference press formed part shape in FIG. 4 is compared with the periodically deviated wave-shaped blank press formed part shape in FIG. 9.
FIG. 11 is a diagram illustrating ranges of the first amount of deviation and the second amount of deviation illustrated in FIGS. 7 and 10 in association with a target shape.
FIG. 12 is an explanatory view of a protrusion pattern provided to a tool.
FIG. 13 is a diagram illustrating a reference press formed part shape obtained by performing press forming analysis using a tool model provided with a protrusion pattern, and an amount of change from a bottom dead center in each portion of the shape.
FIG. 14 is a diagram illustrating a wave-shaped blank press formed part shape obtained by performing press forming analysis using a tool model provided with a protrusion pattern, and an amount of change from a bottom dead center in each portion of the shape.
FIG. 15 is a diagram illustrating a first amount of deviation when the reference press formed part shape in FIG. 13 is compared with the wave-shaped blank press formed part shape in FIG. 14.
FIG. 16 is a diagram illustrating a periodically deviated wave-shaped blank press formed part shape obtained by performing press forming analysis using a tool model provided with a protrusion pattern, and an amount of change from a bottom dead center in each portion of the shape.
FIG. 17 is a diagram illustrating a second amount of deviation when the reference press formed part shape in FIG. 13 is compared with the periodically deviated wave-shaped blank press formed part shape in FIG. 16.
FIG. 18 is a diagram illustrating ranges of the first amount of deviation and the second amount of deviation illustrated in FIGS. 15 and 17 in association with a target shape.
FIG. 19 is an explanatory diagram of a periodically deviated wave-shaped blank model having a wave shape whose amplitude and wavelength are the same as those of the wave shape of the wave-shaped blank model in FIG. 5 and whose period is deviated from that of the wave-shaped blank model in FIG. 5 by 1/2 wavelength.
FIG. 20 is a diagram illustrating a periodically deviated wave-shaped blank press formed part shape obtained by performing press forming analysis using the periodically deviated wave-shaped blank model of FIG. 19 and an amount of change from a bottom dead center in each portion of the shape.
FIG. 21 is a diagram illustrating a second amount of deviation when the reference press formed part shape in FIG. 4 is compared with the periodically deviated wave-shaped blank press formed part shape in FIG. 20.
FIG. 22 is a diagram illustrating ranges of the first amount of deviation and the second amount of deviation illustrated in FIGS. 7 and 21 in association with a target shape.
FIG. 23 is a diagram illustrating a periodically deviated wave-shaped blank press formed part shape obtained by performing press forming analysis using a tool model provided with a protrusion pattern, and an amount of change from a bottom dead center in each portion of the shape.
FIG. 24 is a diagram illustrating a second amount of deviation when the reference press formed part shape in FIG. 13 is compared with the periodically deviated wave-shaped blank press formed part shape in FIG. 23.
FIG. 25 is a diagram illustrating ranges of the first amount of deviation and the second amount of deviation illustrated in FIGS. 15 and 24 in association with a target shape.

### Description of Embodiments

Hereinafter, an embodiment of a press formed part manufacturing method according to the present invention will be described. Note that the present invention is not limited by the present embodiment.

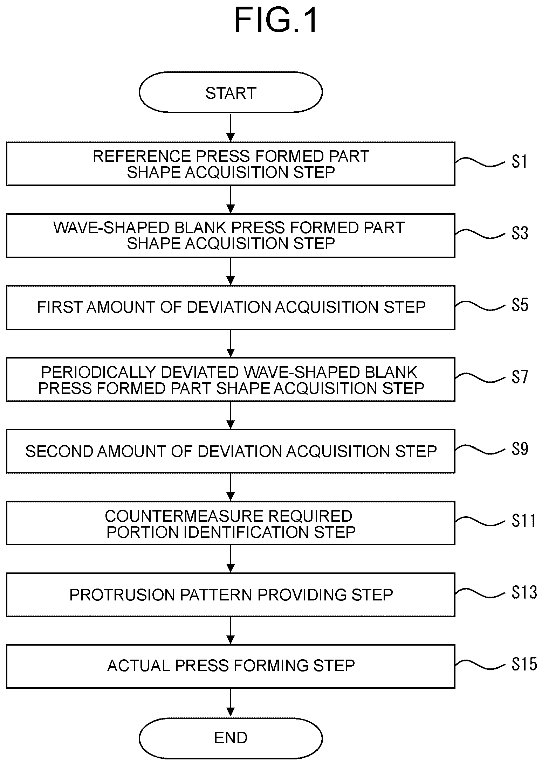

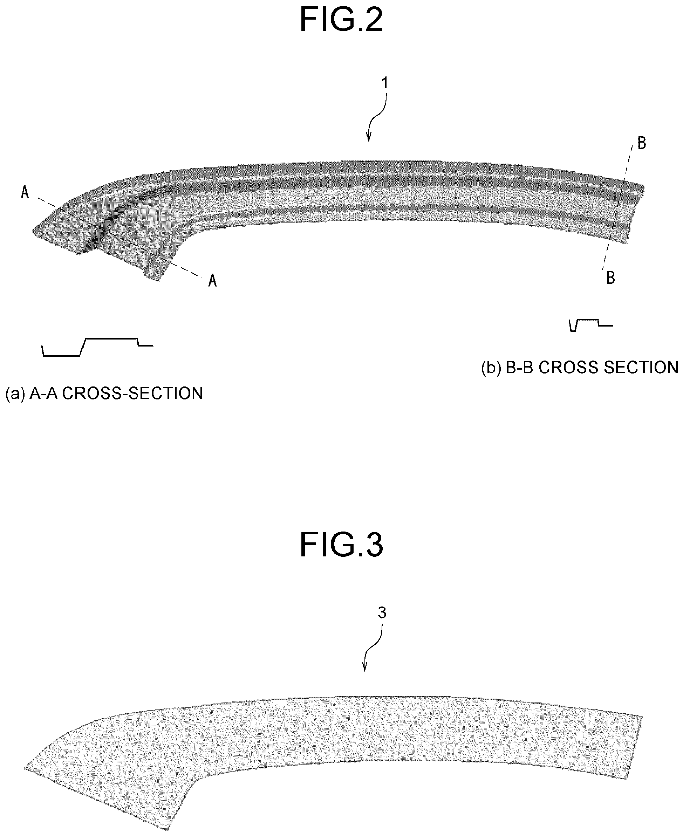

The press formed part manufacturing method according to the embodiment is a method of reducing the influence of the shape variation of the blank in the press formed part when the blank collected from the metal sheet having the shape variation (unevenness) is press formed such as crash forming or deep drawing. Specifically, as shown in FIG. 1, the press formed part manufacturing method according to the embodiment includes a press formed part reference press formed part shape acquisition step S1 to an actual press forming step S15. In the present embodiment, each configuration will be described in detail below by exemplifying a case where a press formed part 1 illustrated in FIG. 2 is press formed as a target shape. In the present embodiment, a blank made of a 1.5 GPa-class steel sheet having a sheet thickness of 1.2 mm and a blank model corresponding thereto are used, but the present invention is not limited thereto.

### <Reference press formed part shape acquisition step>

The reference press formed part shape acquisition step S1 is a step of performing press forming analysis with a predetermined tool model using a flat blank model 3 as illustrated in FIG. 3 and acquiring a press formed part shape after tool release as a reference press formed part shape. Note that the "press forming analysis" in the present description includes an analysis for acquiring the bottom dead center shape and an analysis for acquiring the shape after tool release, that is, after spring back.

The flat blank model 3 is a blank model generally used in press forming analysis, and has a flat shape without unevenness.

In the press forming analysis, CAE analysis such as a finite element method (FEM) is usually performed. Although press forming includes crash forming, deep drawing, and the like, in the present embodiment, a case of crash forming will be described as an example.

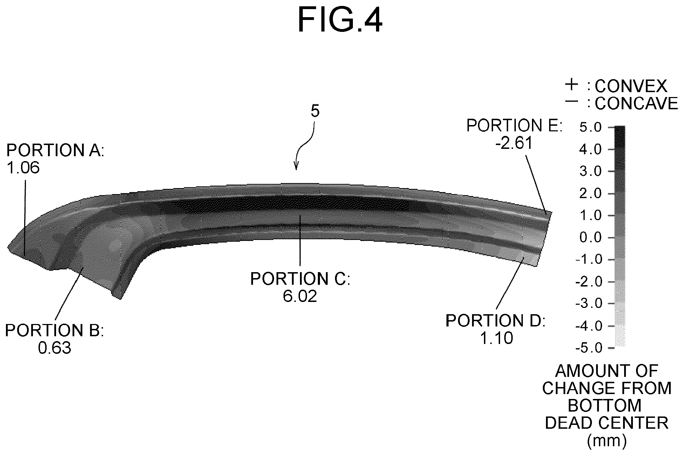

FIG. 4 is a view illustrating a reference press formed part shape 5 after tool release by press forming analysis. In FIG. 4, the amount of change from the bottom dead center is indicated by numerical values and color shading. The amount of change is a value obtained by subtracting the height of the corresponding portion of the bottom dead center shape from the height of each portion of the press formed part shape after tool release and spring-back after press forming in the press forming direction, and corresponds to the spring back amount in the press forming direction. When the height difference (amount of change) is + (plus), the shape is convex relative to the bottom dead center shape, and when the height difference (amount of change) is - (minus), the shape is concave relative to the bottom dead center shape. In FIG. 4, the color of a portion that is concave relative to the bottom dead center shape is lighter, and the color of a portion that is convex is darker. In addition, in the number displayed in FIG. 4, + is the amount of change to the convex direction (in front of the paper surface), and - is the amount of change to the concave direction (behind the paper surface), and the unit is mm.

In this example, as shown in FIG. 4, the amount of change in the left end portion (portion A) of the reference press formed part shape 5 was 1.06 mm. The left end (portion B) of the top portion of the reference press formed part shape 5 was 0.63 mm. The center portion (portion C) of the reference press formed part shape 5 in the longitudinal direction was 6.02 mm. The right end (portion D) of the lower flange portion of the reference press formed part shape 5 was 1.10 mm. The right end portion (portion E) of the reference press formed part shape 5 was -2.61 mm.

### <Wave-shaped blank press formed part shape acquisition step>

The wave-shaped blank press formed part shape acquisition step S3 is a step of performing the same press forming analysis as in the reference press formed part shape acquisition step S1 using the blank model corresponding to the shape variation of the metal sheet to acquire the press formed part shape after tool release.

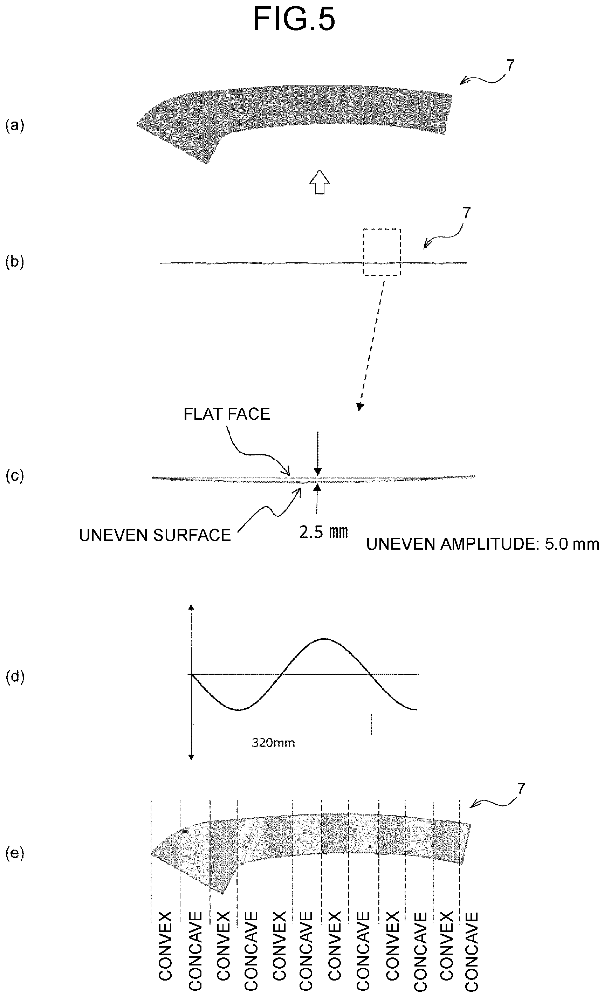

In the wave-shaped blank press formed part shape acquisition step S3, first, a wave-shaped blank model 7 having a shape corresponding to the shape variation of the metal sheet is generated. FIG. 5(a) is a diagram illustrating an example of the wave-shaped blank model 7, and a specific shape thereof will be described below.

The wave-shaped blank model 7 illustrated in FIG. 5(a) is a blank model having a waveform shape having a predetermined wavelength and a predetermined amplitude. The shading in FIG. 5(a) represents unevenness, and a dark color portion has a shape protruding in front of the paper surface, and a light color portion has a shape recessed behind the paper surface. FIG. 5(b) is a state in which FIG. 5(a) is viewed from a direction of an arrow outline with a blank inside, and FIG. 5(c) is a partially enlarged view thereof. In the example illustrated in FIG. 5, a sheet thickness is 1.2 mm, an amplitude of a waveform is 5.0 mm (±2.5 mm), and a wavelength (see FIG. 5(d)) is 320 mm. In addition, the start position and the end position of the wave shape set in the blank are not necessarily the end of the metal sheet. FIG. 5(e) is a diagram illustrating the wavy unevenness of FIG. 5(a) in an emphasized manner.

The wave-shaped blank model 7 may be generated based on a measurement result obtained by measuring a shape of an actual blank collected from a predetermined position of a metal sheet having a shape variation. For example, the wave-shaped blank model 7 may be generated by measuring the shape of the actual blank with a three-dimensional shape measuring instrument using a laser telemeter and using a representative wavelength and amplitude in the measurement result.

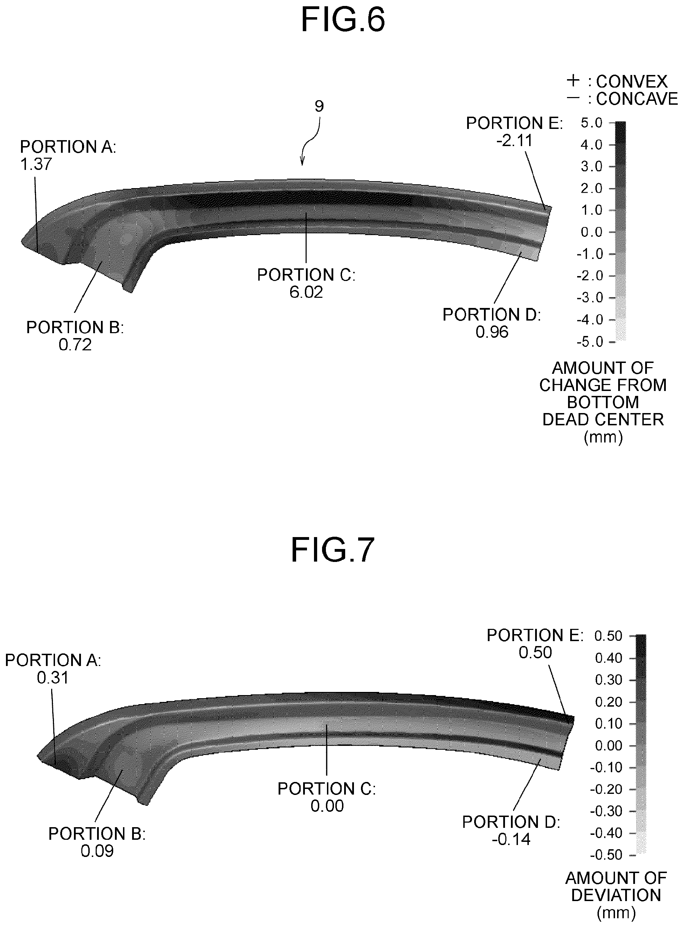

Next, in the wave-shaped blank press formed part shape acquisition step S3, press forming analysis when press forming is performed with the same predetermined tool model as in the reference press formed part shape acquisition step S1 is performed using the wave-shaped blank model 7. Then, the press formed part shape after tool release is acquired as a wave-shaped blank press formed part shape 9. FIG. 6 is a diagram illustrating the wave-shaped blank press formed part shape 9 obtained by performing press forming analysis. The colors and numerical values illustrated in FIG. 6 are similar to those in FIG. 4. In this example, as shown in FIG. 6, the amount of change in the left end portion (portion A) of the wave-shaped blank press formed part shape 9 was 1.37 mm. The left end (portion B) of the top portion of the wave-shaped blank press formed part shape 9 was 0.72 mm. The center portion (portion C) of the wave-shaped blank press formed part shape 9 in the longitudinal direction was 6.02 mm. The right end (portion D) of the lower flange portion of the wave-shaped blank press formed part shape 9 was 0.96 mm. The right end portion (portion E) of the wave-shaped blank press formed part shape 9 was -2.11 mm.

### <First amount of deviation acquisition step>

The first amount of deviation acquisition step S5 is a step of comparing the reference press formed part shape 5 (FIG. 4) with the wave-shaped blank press formed part shape 9 (FIG. 6) to obtain a portion where both shapes are deviated from each other and an amount of deviation (first amount of deviation).

In the present embodiment, the press formed part shape at the bottom dead center is used as the reference shape, the amount of change (spring back amount) in each portion of the press formed part shape after tool release from the reference shape is obtained, and the difference between the amounts of change in the two press formed part shapes was obtained as the amount of deviation. That is, the first amount of deviation obtained in the first amount of deviation acquisition step S5 is a value obtained by subtracting the amount of change in the reference press formed part shape 5 using the flat blank model (FIG. 4) from the amount of change in the wave-shaped blank press formed part shape 9 using the blank model having shape variation (FIG. 6). Therefore, when the first amount of deviation is + (plus), the portion of the wave-shaped blank press formed part shape 9 has a convex shape as compared with the reference press formed part shape 5. When the first amount of deviation is - (minus), the portion of the wave-shaped blank press formed part shape 9 has a recessed shape as compared with the reference press formed part shape 5.

FIG. 7 is a diagram illustrating the first amount of deviation obtained as described above. As shown in FIG. 7, the first amount of deviation between the wave-shaped blank press formed part shape 9 and the reference press formed part shape 5 was 0.31 mm at the left end portion (portion A). The first amount of deviation was 0.09 mm at the left end (portion B) of the top portion. The first amount of deviation was 0.00 mm at the center portion in the longitudinal direction (portion C). The first amount of deviation was -0.14 mm at the right end (portion D) of the lower flange portion. The first amount of deviation was 0.50 mm at the right end portion (portion E).

### <Periodically deviated wave-shaped blank press formed part shape acquisition step>

The periodically deviated wave-shaped blank press formed part shape acquisition step S7 is a step of performing the same press forming analysis as in the reference press formed part shape acquisition step S1 using a wave-shaped blank model having a shape different from that of the wave-shaped blank model 7 to acquire the press formed part shape after tool release.

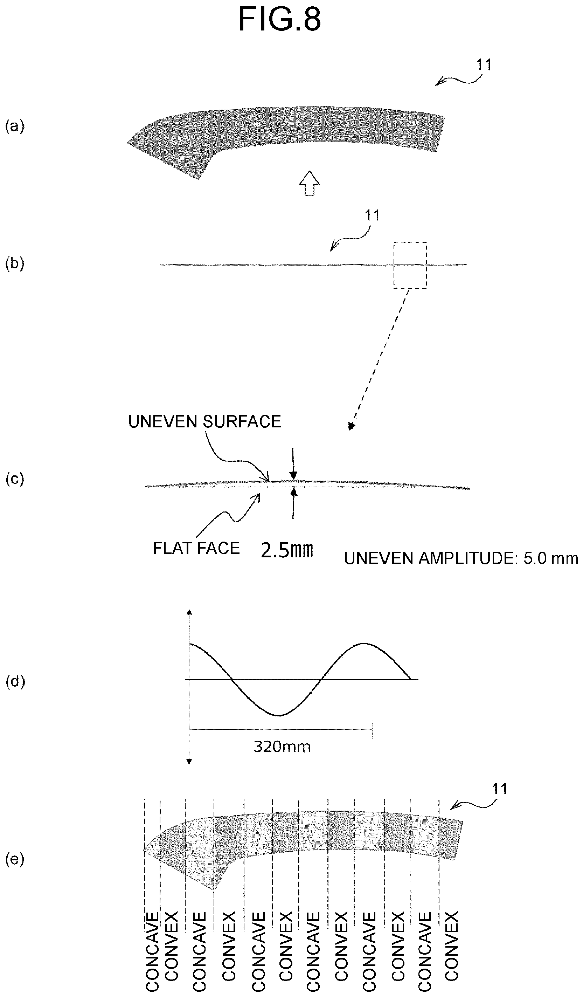

In the periodically deviated wave-shaped blank press formed part shape acquisition step S7, first, a periodically deviated wave-shaped blank model 11 having a wave shape whose amplitude and wavelength are the same as those of the wave shape of the wave-shaped blank model 7 and whose period is deviated from a period of the wave-shaped blank model 7 is generated. FIG. 8 is a diagram illustrating an example of the periodically deviated wave-shaped blank model 11, and a specific shape thereof will be described below.

The example illustrated in FIG. 8(a) is a blank model having a periodic waveform shape having a predetermined wavelength and a predetermined amplitude, and the shading in FIG. 8(a) represents the waveform shape. FIG. 8(b) is a state in which FIG. 8(a) is viewed from a direction of an arrow outline with a blank inside, and FIG. 8(c) is a partially enlarged view thereof. In the example illustrated in FIG. 8, the sheet thickness is 1.2 mm, and the wave-shaped amplitude and wavelength are the same as those of the wave-shaped blank model 7 in FIG. 5, but the period of the wave-shaped is shifted rightward on the paper surface by 1/4 wavelength from that of the wave-shaped blank model 7 (see FIGS. 8(d) and 8(e)).

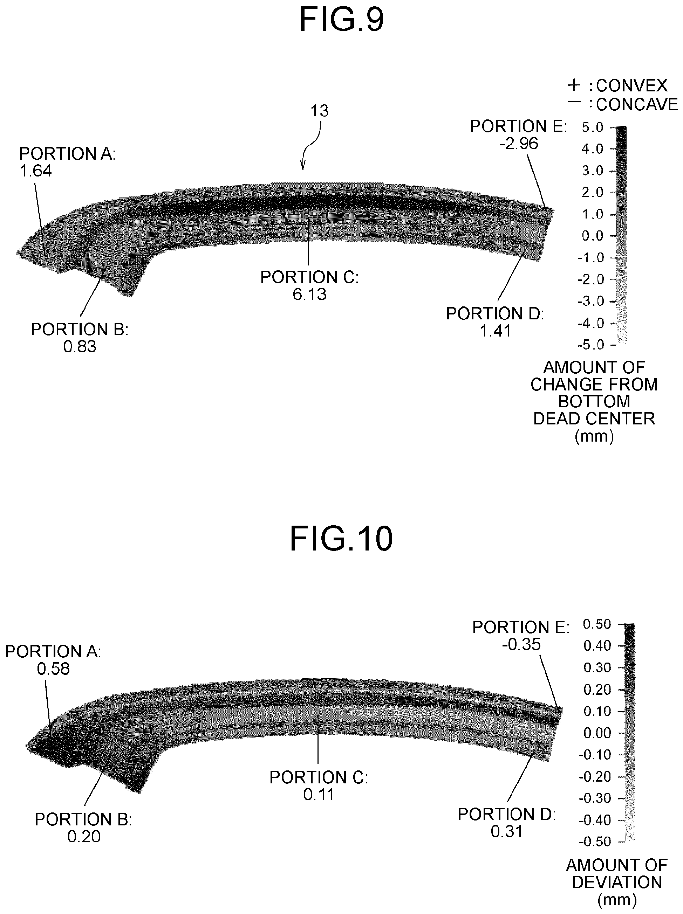

Next, in the periodically deviated wave-shaped blank press formed part shape acquisition step S7, the press forming analysis is performed using the periodically deviated wave-shaped blank model 11 when press forming is performed using the same predetermined tool model as in the reference press formed part shape acquisition step S1. Then, the press formed part shape after tool release is acquired as a periodically deviated wave-shaped blank press formed part shape 13. FIG. 9 is a diagram illustrating the periodically deviated wave-shaped blank press formed part shape 13. The colors and numerical values illustrated in FIG. 9 are similar to those in FIGS. 4 and 6. In this example, as shown in FIG. 9, the amount of change in the left end portion (portion A) of the periodically deviated wave-shaped blank press formed part shape 13 was 1.64 mm. The amount of change in the left end (portion B) of the top portion of the periodically deviated wave-shaped blank press formed part shape 13 was 0.83 mm. The amount of change at the center portion (portion C) of the periodically deviated wave-shaped blank press formed part shape 13 in the longitudinal direction was 6.13 mm. The amount of change in the right end (portion D) of the lower flange portion of the periodically deviated wave-shaped blank press formed part shape 13 was 1.41 **mm.** The amount of change in the right end portion (portion E) of the periodically deviated wave-shaped blank press formed part shape 13 was -2.96 **mm.**

### <Second amount of deviation acquisition step>

The second amount of deviation acquisition step S9 is a step of comparing the reference press formed part shape 5 with the periodically deviated wave-shaped blank press formed part shape 13 and obtaining a portion where both shapes are deviated and an amount of deviation (second amount of deviation). Since the method of obtaining the second amount of deviation is similar to the method described in the first amount of deviation acquisition step S5, the description thereof will be omitted.

FIG. 10 is a diagram illustrating a second amount of deviation when the reference press formed part shape 5 (FIG. 4) is compared with the periodically deviated wave-shaped blank press formed part shape 13 (FIG. 9). As shown in FIG. 10, the second amount of deviation between the periodically deviated wave-shaped blank press formed part shape 13 and the reference press formed part shape 5 was 0.58 mm at the left end portion (portion A). The second amount of deviation was 0.20 mm at the left end (portion B) of the top portion. The second amount of deviation was 0.11 mm at the center portion (portion C) in the longitudinal direction. The second amount of deviation was 0.31 mm at the right end (portion D) of the lower flange portion. The second amount of deviation was -0.35 mm at the right end portion (portion E).

### <Countermeasure required portion identification step>

The countermeasure required portion identification step S11 is a step of identifying, as the countermeasure required portions, portions of the press formed part 1 corresponding to a portion where the first amount of deviation exceeding the threshold value has occurred in the first amount of deviation acquisition step S5 and a portion where the second amount of deviation exceeding the threshold value has occurred in the second amount of deviation acquisition step S9.

For example, in a case where a plurality of press formed parts is overlapped and joined to be assembled to members of a vehicle body, when there is a large deviation in the shape of the press formed part (particularly, a flange portion or the like), it is difficult to join the press formed parts, and measures may be required. Therefore, in the present embodiment, a portion where influence (large deviation) of the shape variation of the blank is assumed to be large is identified as a countermeasure required portion, and measures for reducing the influence are taken.

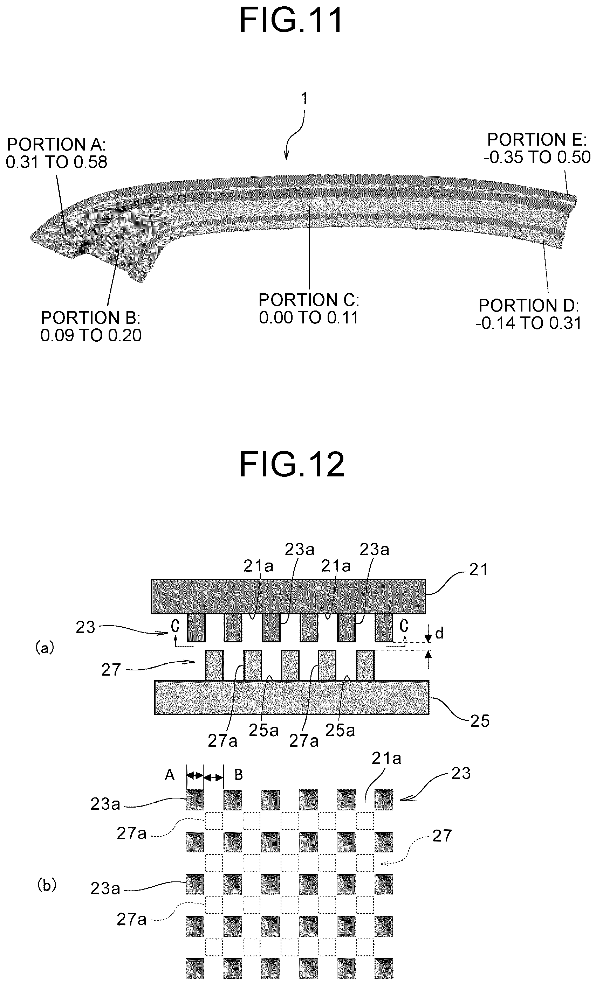

FIG. 11 is a diagram illustrating both the first amount of deviation (see FIG. 7) obtained in the first amount of deviation acquisition step S5 and the second amount of deviation (see FIG. 10) obtained in the second amount of deviation acquisition step S9 in correspondence with the target shape of the press formed part 1. As illustrated in FIG. 11, the amount of deviation was 0.31 mm to 0.58 mm at the portion A. The amount of deviation was 0.09 mm to 0.20 mm at the portion B. The amount of deviation was 0.00 mm to 0.11 mm at the portion C. The amount of deviation was -0.14 mm to 0.31 mm at the portion D. The amount of deviation was -0.35 mm to 0.50 mm at the portion E.

For example, when the threshold value in the countermeasure required portion identification step S11 is ±0.15 mm, the portions where the amount of deviation exceeding the threshold value has occurred are the portion A, the portion B, the portion D, and the portion E. Therefore, in the countermeasure required portion identification step S11, these portions are identified as the countermeasure required portions.

In the present embodiment, as a measure for reducing the influence of the shape variation of the blank, a protrusion pattern is provided to a portion, of an actual tool for forming a press formed part, where the above countermeasure required portion is formed, and press forming is performed using the actual tool. The protrusion pattern is provided to each of the portions of the upper tool and the lower tool constituting the actual tool. FIG. 12 is a diagram illustrating an example of a protrusion pattern provided to an actual tool. The protrusion pattern shape will be described.

FIG. 12(a) is a side view of a protrusion pattern 23 of an upper tool 21 and a protrusion pattern 27 of a lower tool 25 at the bottom dead center. FIG. 12(b) is a diagram taken along line C-C of FIG. 12(a). In FIG. 12(b), the position of the protrusion pattern 27 of the facing lower tool 25 is indicated by broken lines. As illustrated in FIGS. 12(a) and 12 (b), the protrusion patterns 23 and 27 of the present embodiment include a plurality of protrusions 23a and 27a (protrusion group) formed at predetermined intervals on a flat face or a curved face on the surface of the upper tool 21 or the lower tool 25.

The shape of each of the distal end faces of the protrusions 23a and 27a is a square having a side length of A (mm). Such protrusions 23a and 27a are disposed vertically and horizontally with a predetermined distance B (mm) to form regular protrusion patterns 23 and 27. By providing the protrusion patterns 23 and 27 as illustrated in FIG. 12 to the portion of the upper tool 21 and the lower tool 25 where the countermeasure required portion is to be formed, press forming can be performed while the protrusions 23a and 27a suppress the shape variation of the countermeasure required portion, so that the influence of the shape variation of the blank is reduced.

The size (vertical length and horizontal length) A of each of the distal end faces of the protrusions 23a and 27a is preferably 3 mm or more and 50 mm or less. When the size A of each of the distal end faces of the protrusions 23a and 27a is less than 3 mm, the shape variation (waveform) of the blank may remain in the press formed part after press forming, and the effect is reduced. In addition, when the size A of each of the distal end faces of the protrusions 23a and 27a exceeds 50 mm, the size of the protrusion is larger than the portions such as the top portion and the flange portion of the tool, and the blank is pressed by a wide distal end face of the protrusion, so that the forming is similar to a forming without the protrusion and there is no effect.

In addition, the distance B between the adjacent protrusions is preferably 1.2A or more and 2.0A or less with respect to the size A of each of the distal end faces of the protrusions 23a and 27a. When the distance B (mm) between adjacent protrusions is less than 1.2A or more than 2.0A, the shape variation (wavy shape) of the blank may remain in the press formed part after press forming, which is not preferable.

Note that the number and arrangement of the protrusions 23a and 27a and the shape of the distal end face illustrated in FIG. 12 are examples, and do not limit the aspect of the protrusion pattern of the present invention. For example, the shape of the distal end face of the protrusion may be a rectangle or a circle.

Further, as illustrated in FIGS. 12(a) and 12 (b), the protrusion pattern 23 provided to the upper tool 21 and the protrusion pattern 27 provided to the lower tool 25 may be configured so that the protrusions do not face each other. That is, when the protrusion patterns 23 and 27 are provided, the protrusion patterns 23 and 27 may be provided to the upper tool 21 and the lower tool 25 so that the protrusion 23a of the upper tool 21 faces a flat face 25a (or curved face) of the lower tool 25 and the protrusion 27a of the lower tool 25 faces a flat face 21a (or curved face) of the upper tool 21.

Furthermore, in the case of forming a blank having a sheet thickness t (mm), the distance d between the lower face of the protrusion 23a of the upper tool 21 and the upper face of the protrusion 27a of the lower tool 25 at the bottom dead center is preferably 0.1 t or more and 0.5 t or less. As a result, when the blank having the shape variation is sandwiched between the upper tool 21 and the lower tool 25, a new alternating minute strain can be applied to the portion corresponding to the countermeasure required portion of the blank surface. As a result, the shape variation of the countermeasure required portion is alleviated by the strain, and the influence of the shape variation of the blank is easily suppressed.

When the distance d is less than 0.1 t, the amount of strain is too large, and the shape of each of the distal end faces of the protrusions 23a and 27a are clearly transferred to the surface of the press formed part after press forming, which is not preferable. In addition, if the distance d exceeds 0.5 t, the amount of strain is insufficient and the effect of alleviating the shape variation of the blank is reduced, which is not preferable.

In the present embodiment, the effect of press forming using the upper tool 21 and the lower tool 25 provided with the protrusion patterns 23 and 27 has been confirmed by press forming analysis, and will be described below.

In the press forming analysis described below, the shape of each of the distal end faces of the protrusions 23a and 27a was set to a square of 3 mm (A = 3 mm), and the distance B between adjacent protrusions was set to 4.5 mm. The protrusion pattern 23 of the upper tool 21 and the protrusion pattern 27 of the lower tool 25 were provided so that the protrusions did not face each other. Specifically, as shown in FIG. 12(b), the positions of the protrusion 23a of the upper tool 21 and the protrusion 27a of the lower tool 25 were set so as to be shifted from each other in the lateral direction on the paper surface and the longitudinal direction on the paper surface. The positional relationship between the protrusion of the upper tool and the protrusion of the lower tool is not limited to this, and may be shifted only in the lateral direction on the paper surface or only in the longitudinal direction on the paper surface.

The distance d between the lower face of the protrusion 23a of the upper tool 21 and the upper face of the protrusion 27a of the lower tool 25 at the bottom dead center was 0.36 mm. As described above, since the sheet thickness t of the blank of the present embodiment is 1.2 mm, the relationship between the distance d and the sheet thickness t of the blank is d = 0.3 t.

In addition, in the present embodiment, the above protrusion patterns 23 and 27 are provided to the portion corresponding to the countermeasure required portion in the predetermined tool model used for the press forming analysis described above. In the present embodiment, similar analysis as in the reference press formed part shape acquisition step S1 to the second amount of deviation acquisition step S9 was performed using the tool model (hereinafter, referred to as a "protrusion pattern providing tool model"). Note that the amount of change and the amount of deviation in the following description are obtained by a method similar to that illustrated in FIGS. 4 to 11.

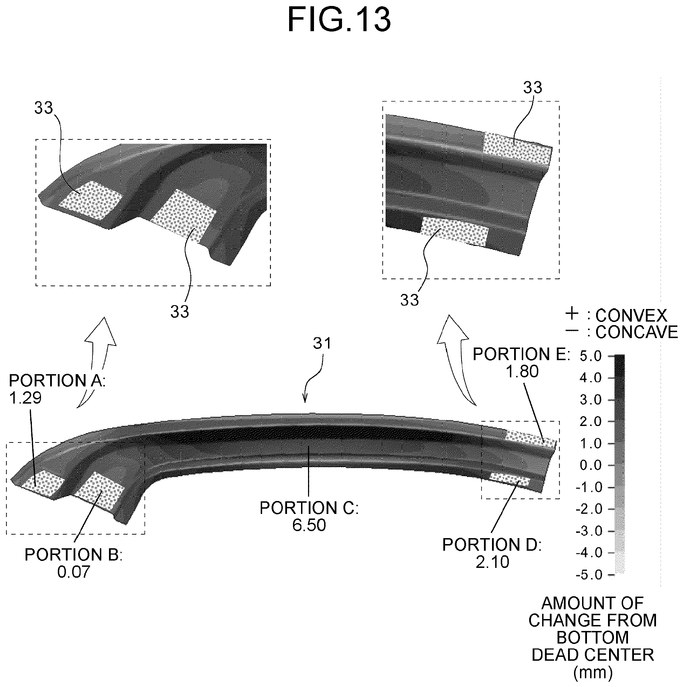

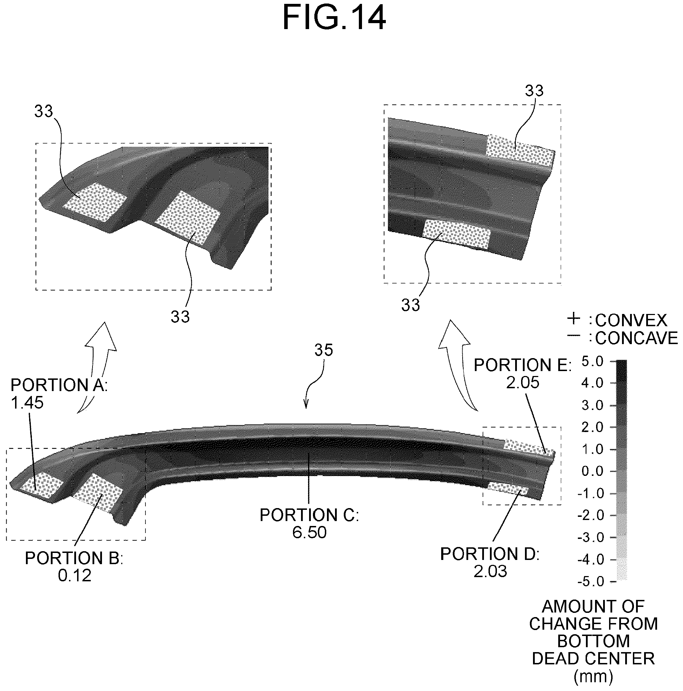

FIG. 13 is a diagram illustrating a reference press formed part shape 31 obtained by performing press forming analysis on the flat blank model 3 (see FIG. 3) using the protrusion pattern providing tool model. In FIG. 13, a region (strain provided region 33) to which strain is provided by the protrusion patterns 23 and 27 of the protrusion pattern providing tool model is shaded (the same applies to FIGS. 14 to 18).

As shown in FIG. 13, the amount of change of the portion A of the reference press formed part shape 31 was 1.29 mm when performing press forming analysis using the protrusion pattern providing tool model. The amount of change of the portion B of the reference press formed part shape 31 was 0.07 mm. The amount of change of the portion C of the reference press formed part shape 31 was 6.50 mm. The amount of change of the portion D of the reference press formed part shape 31 was 2.10 mm. The amount of change of the portion E of the reference press formed part shape 31 was 1.80 mm.

FIG. 14 is a diagram illustrating a wave-shaped blank press formed part shape 35 obtained by performing press forming analysis on the wave-shaped blank model 7 (see FIG. 5) using the protrusion pattern providing tool model. As shown in FIG. 14, the amount of change of the portion A of the wave-shaped blank press formed part shape 35 was 1.45 mm. The amount of change of the portion B of the wave-shaped blank press formed part shape 35 was 0.12 mm. The amount of change of the portion C of the wave-shaped blank press formed part shape 35 was 6.50 mm. The amount of change of the portion D of the wave-shaped blank press formed part shape 35 was 2.03 mm. The amount of change of the portion E of the wave-shaped blank press formed part shape 35 was 2.05 mm.

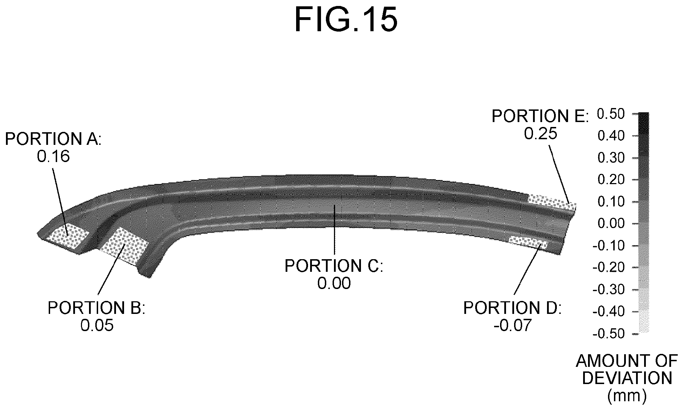

FIG. 15 is a diagram illustrating a first amount of deviation obtained by comparing the reference press formed part shape 31 (FIG. 13) with the wave-shaped blank press formed part shape 35 (FIG. 14). As illustrated in FIG. 15, the first amount of deviation between the reference press formed part shape 31 and the wave-shaped blank press formed part shape 35 when performing press forming analysis using the protrusion pattern providing tool model was 0.16 mm at the portion A. The first amount of deviation was 0.05 mm at the portion B. The first amount of deviation was 0.00 mm at the portion C. The first amount of deviation was -0.07 mm at the portion D. The first amount of deviation was 0.25 mm at the portion E.

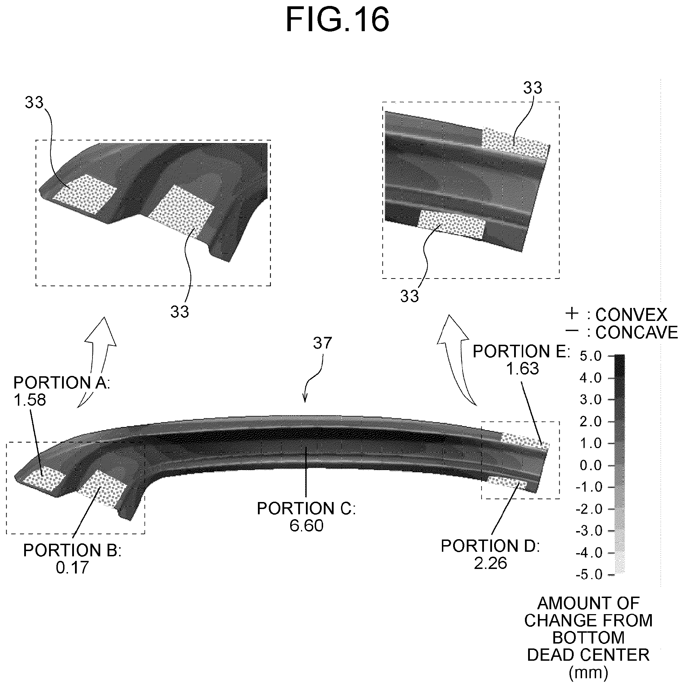

FIG. 16 is a diagram illustrating a periodically deviated wave-shaped blank press formed part shape 37 obtained by performing press forming analysis on the periodically deviated wave-shaped blank model 11 (see FIG. 8) using the protrusion pattern providing tool model. As shown in FIG. 16, the amount of change of the portion A of the periodically deviated wave-shaped blank press formed part shape 37 was 1.58 mm. The amount of change of the portion B of the periodically deviated wave-shaped blank press formed part shape 37 was 0.17 mm. The amount of change of the portion C of the periodically deviated wave-shaped blank press formed part shape 37 was 6.60 mm. The amount of change of the portion D of the periodically deviated wave-shaped blank press formed part shape 37 was 2.26 mm. The amount of change of the portion E of the periodically deviated wave-shaped blank press formed part shape 37 was 1.63 mm.

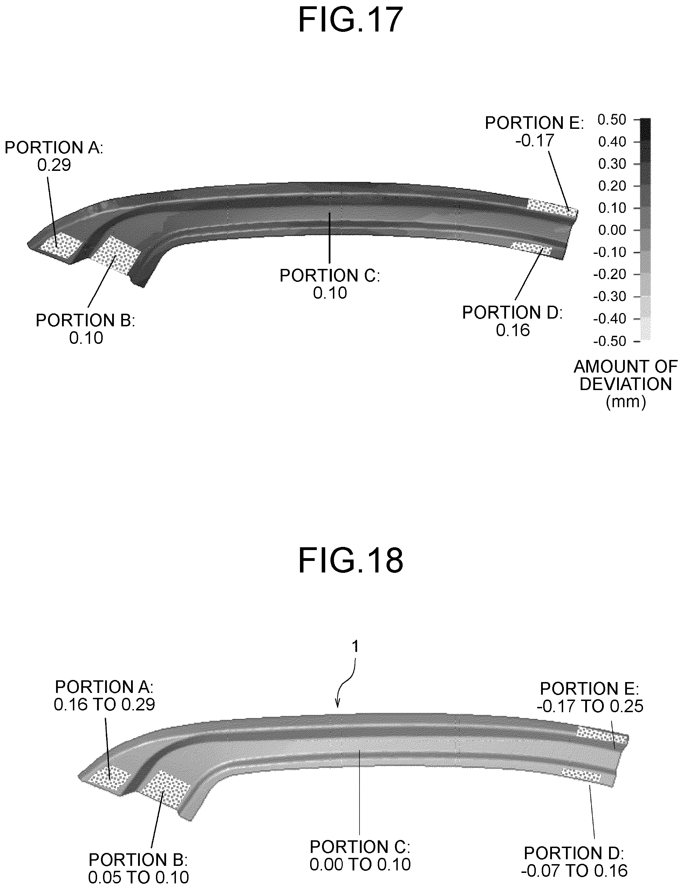

FIG. 17 is a diagram illustrating a second amount of deviation obtained by comparing the reference press formed part shape 31 (FIG. 13) with the periodically deviated wave-shaped blank press formed part shape 37 (FIG. 16). As shown in FIG. 17, the second amount of deviation between the reference press formed part shape 31 and the periodically deviated wave-shaped blank press formed part shape 37 was 0.29 mm at the portion A. The second amount of deviation was 0.10 mm at the portion B. The second amount of deviation was 0.10 mm at the portion C. The second amount of deviation was 0.16 mm at the portion D. The second amount of deviation was -0.17 mm at the portion E.

FIG. 18 is a diagram illustrating both the first amount of deviation in FIG. 15 and the second amount of deviation in FIG. 17 in association with the target shape. As illustrated in FIG. 18, the first amount of deviation and the second amount of deviation were 0.16 mm to 0.29 mm at the portion A. The first amount of deviation and the second amount of deviation were 0.05 mm to 0.10 mm at the portion B. The first amount of deviation and the second amount of deviation were 0.00 mm to 0.10 mm at the portion C. The first amount of deviation and the second amount of deviation were -0.07 mm to 0.16 mm at the portion D. The first amount of deviation and the second amount of deviation were -0.17 mm to 0.25 mm at the portion E. The amount of deviation in FIG. 18 is smaller than the amount of deviation before the countermeasure illustrated in FIG. 11. Therefore, it was confirmed that there was an effect of reducing the influence of the shape variation of the blank by using the protrusion pattern providing tool model.

### <Protrusion pattern providing step>

The protrusion pattern providing step S13 is a step of providing the protrusion patterns 23 and 27 described in FIG. 12 to the actual tool. The protrusion patterns 23 and 27 may be provided by performing laser processing, etching processing, or the like on the surface of the actual tool. The protrusion patterns 23 and 27 are provided to a portion, of the upper tool 21 and the lower tool 25 of the actual tool, for forming a countermeasure required portion, or the countermeasure required portion and its periphery. At this time, as described with reference to FIG. 12, it is preferable have a positional relationship in which the protrusion 23a of the upper tool 21 faces the flat face 25a or the curved face of the lower tool 25, and the protrusion 27a of the lower tool 25 faces the flat face 21a or the curved face of the upper tool 21. Here, the protrusion patterns 23 and 27 similar to that of the protrusion pattern providing tool model used for the press forming analysis described in FIGS. 13 to 18 were provided to the actual tool.

### <Actual press forming step>

The actual press forming step S15 is a step of press forming the actual blank using the upper tool 21 and the lower tool 25 provided with the protrusion patterns 23 and 27 in the protrusion pattern providing step S13. In the actual press forming step S15, as described above, it is preferable to perform the press forming so that the distance d between the lower face of the protrusion 23a of the upper tool 21 and the upper face of the protrusion 27a of the lower tool 25 at the bottom dead center is 0.1 t or more and 0.5 t or less (t (mm) is the sheet thickness of the blank).

When an actual blank having a shape variation was press formed using an actual tool provided with the protrusion patterns 23 and 27, in the shape of the press formed part after press forming, the influence of the shape variation of the blank was small as in the analysis result of FIG. 18, and good dimensional accuracy was obtained.

As described above, according to the present embodiment, since it is possible to identify a portion where influence of the shape variation of the blank is large and take an appropriate measure, it is possible to stably obtain a press formed part with favorable dimensional accuracy. Note that, in the present embodiment, since a plurality of patterns of blank models assuming blanks having shape variations is generated, and the amount of deviation in each case is obtained to identify the countermeasure required portion, a difference in shape variation occurring between individual actual blanks is taken into consideration.

Note that, although only one type of periodically deviated wave-shaped blank model is generated in the above description, a plurality of types of periodically deviated wave-shaped blank models may be generated. In this case, the waveforms of the periodically deviated wave-shaped blank models have periods deviated from each other (the wavelength and the amplitude are common in the wave-shaped blank model and all the periodically deviated wave-shaped blank models). By increasing the number of patterns of the blank model assuming the blank having the shape variation, it is possible to more specifically consider the difference in the shape variation occurring between the individual actual blanks.

In the above description, when the amount of deviation between the two press formed part shapes is obtained, the difference in the amount of change (spring back amount) from the bottom dead center in the press forming direction is defined as the amount of deviation but the present invention is not limited thereto. For example, in the present invention, a difference obtained by subtracting, from the height of each portion after tool release (after spring back) in one press formed part shape in the press forming direction, the height of each portion after tool release (after spring back) in the other press formed part shape may be used as the amount of deviation. In this case, it is necessary to set a fixing point common between the two press formed part shapes, and the amount of deviation may vary depending on the selection of the fixing point. In this regard, as in the present embodiment, when comparing the amounts of change based on the shape at the bottom dead center, which is constant regardless of the presence or absence of the shape variation of the blank, the amount of deviation can be accurately and easily obtained, which is preferable.

In the present embodiment, the case of crash forming is described as an example, but deep drawing may be used.

A recess/protrusion pattern may be formed on the press formed part after press forming by using the upper tool and the lower tool provided with the protrusion pattern. In such a case, after the actual press forming step S15, a re-strike process of re-pressing the press formed part on which the recess/protrusion pattern is formed to crush the recess/protrusion pattern may be further included. By crushing the recess/protrusion pattern in the re-strike process, strain is applied to the portion where the recess/protrusion pattern is formed and the periphery thereof to be work cured, and the rigidity is further improved. This makes it possible to suppress the waveform (shape variation) remaining in the press formed part and to improve the dimensional accuracy.

### [Examples]

In order to confirm the effect of the present invention, the press formed part manufacturing method described in FIG. 1 was performed. In the present example, as in the embodiment, the press formed part 1 of FIG. 2 was set to a target shape. In addition, the forming of the CAE analysis in the present example was crash forming as in the embodiment. The amount of change and the amount of deviation in the present example were obtained in the same manner as in the embodiment.

First, in the present example, as in the embodiment, the reference press formed part shape acquisition step S1 was performed using the flat blank model 3 (see FIG. 3). The amount of change in the reference press formed part shape 5 when performing press forming analysis on the flat blank model 3 with a predetermined tool model is as follows. That is, as described with reference to FIG. 4, the amount of change was 1.06 mm at the portion A, 0.63 mm at the portion B, 6.02 mm at the portion C, 1.10 mm at the portion D, and - 2.61 mm at the portion E.

In the present example, as in the embodiment, the wave-shaped blank press formed part shape acquisition step S3 was performed using the wave-shaped blank model 7 (see FIG. 5). The amount of change in the wave-shaped blank press formed part shape 9 when performing press forming analysis on the wave-shaped blank model 7 using a predetermined tool model is as follows. That is, as described in FIG. 6, the amount of change was 1.37 mm at the portion A, 0.72 mm at the portion B, 6.02 mm at the portion C, 0.96 mm at the portion D, and -2.11 mm at the portion E.

Further, in the present example, in the first amount of deviation acquisition step S5, the reference press formed part shape 5 (FIG. 4) and the wave-shaped blank press formed part shape 9 (FIG. 6) were compared to obtain the amount of deviation (first amount of deviation) between both shapes. As described with reference to FIG. 7, the first amount of deviation was 0.31 mm at the portion A, 0.09 mm at the portion B, 0.00 mm at the portion C, - 0.14 mm at the portion D, and 0.50 mm at the portion E.

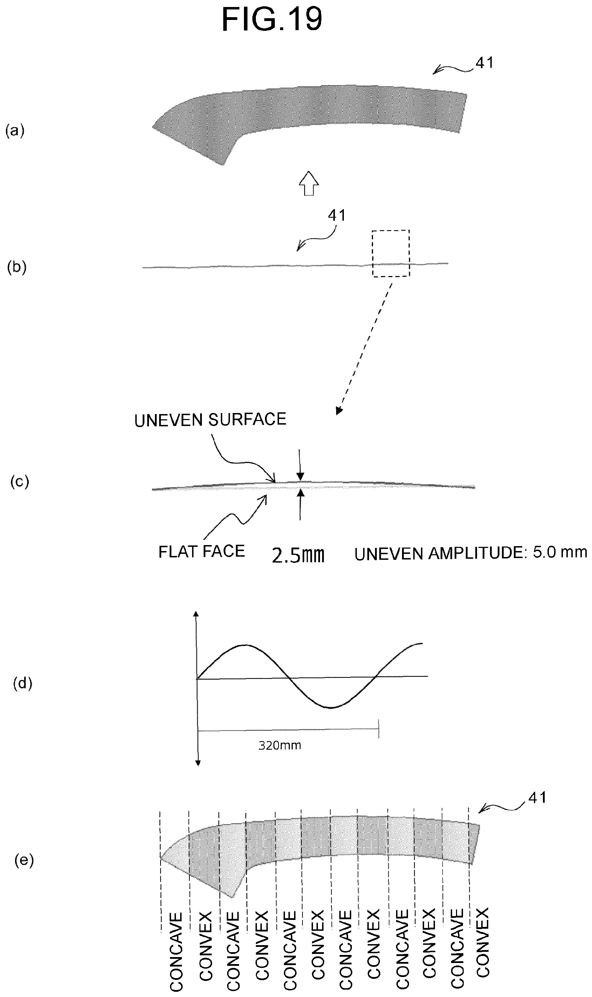

Subsequently, in the present example, in the periodically deviated wave-shaped blank press formed part shape acquisition step S7, a wave-shaped blank model having a shape different from that of the wave-shaped blank model 7 was generated. In the present example, press forming analysis was performed using a predetermined tool model similar to the above, and the press formed part shape after tool release was obtained. As the wave-shaped blank model having a shape different from that of the wave-shaped blank model 7, the periodically deviated wave-shaped blank model 11 described in FIG. 8 was used in the embodiment, but a periodically deviated wave-shaped blank model 41 illustrated in FIG. 19 was used in the present example. A specific shape of the periodically deviated wave-shaped blank model 41 will be described below.

The example illustrated in FIG. 19 is a blank model having a periodic waveform shape having a predetermined wavelength and a predetermined amplitude, and the shading in FIG. 19(a) represents unevenness. FIG. 19(b) is a state in which FIG. 19(a) is viewed from a direction of an arrow outline with a blank inside, and FIG. 19(c) is a partially enlarged view thereof. In the example illustrated in FIG. 19, the sheet thickness is 1.2 mm, and the amplitude and wavelength of the unevenness are the same as those of the wave-shaped blank model 7 in FIG. 5, but the wave-shaped period is shifted rightward on the paper surface by 1/2 wavelength from that of the wave-shaped blank model 7 (see FIGS. 19(d) and 19(e) ).

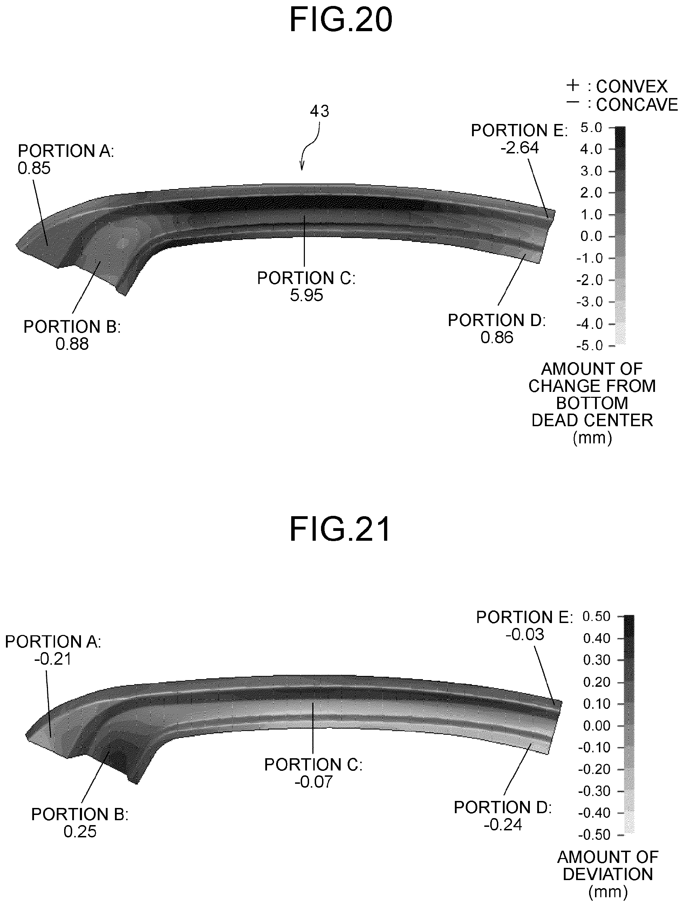

FIG. 20 is a diagram illustrating a periodically deviated wave-shaped blank press formed part shape 43 when performing press forming analysis on the periodically deviated wave-shaped blank model 41 in FIG. 19 using a predetermined tool model. As illustrated in FIG. 20, the amount of change of the portion A of the periodically deviated wave-shaped blank press formed part shape 43 when performing press forming analysis using a predetermined tool model was 0.85 mm. The amount of change of the portion B of the periodically deviated wave-shaped blank press formed part shape 43 was 0.88 mm. The amount of change of the portion C of the periodically deviated wave-shaped blank press formed part shape 43 was 5.95 mm. The amount of change of the portion D of the periodically deviated wave-shaped blank press formed part shape 43 was 0.86 mm. The amount of change of the portion E of the periodically deviated wave-shaped blank press formed part shape 43 was -2.64 mm.

Further, in the present example, in the second amount of deviation acquisition step S9, the reference press formed part shape 5 (FIG. 4) and the periodically deviated wave-shaped blank press formed part shape 43 (FIG. 20) were compared to obtain the amount of deviation (second amount of deviation). As shown in FIG. 21, the second amount of deviation between the periodically deviated wave-shaped blank press formed part shape 43 and the reference press formed part shape 5 was -0.21 mm at the portion A, 0.25 mm at the portion B, -0.07 mm at the portion C, -0.24 mm at the portion D, and -0.03 mm at the portion E.

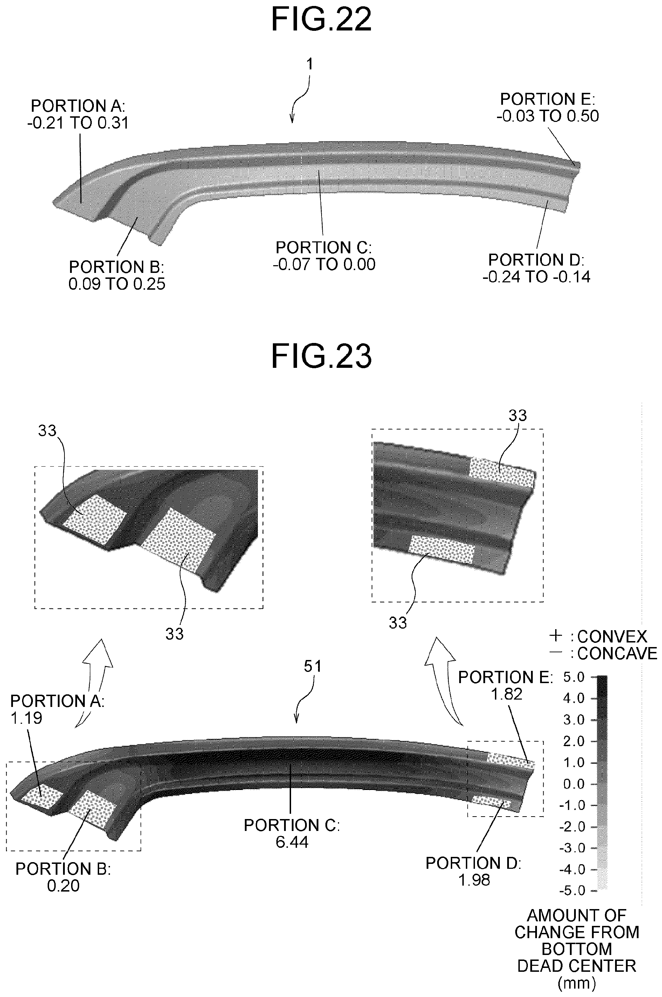

FIG. 22 is a diagram illustrating both the first amount of deviation (FIG. 7) obtained in the first amount of deviation acquisition step S5 and the second amount of deviation (FIG. 21) obtained in the second amount of deviation acquisition step S9 in association with the press formed part 1 (target shape). As illustrated in FIG. 22, the amount of deviation before the countermeasure was -0.21 mm to 0.31 mm at the portion A, 0.09 mm to 0.25 mm at the portion B, -0.07 mm to 0.00 mm at the portion C, -0.24 mm to -0.14 mm at the portion D, and -0.03 mm to 0.50 mm at the portion E.

Here, for example, when the threshold value in the countermeasure required portion identification step S11 is ±0.15 mm, the portions where the amount of deviation exceeding the threshold value has occurred are the portion A, the portion B, the portion D, and the portion E. Therefore, these portions were identified as countermeasure required portions.

Also in the present example, as a measure for reducing the influence of the shape variation of the blank, the protrusion patterns 23 and 27 described in FIG. 12 were provided on the surface of the actual tool corresponding to the above countermeasure required portion. In the present example, the effect has been confirmed by press forming analysis, and will be described below.

In the press forming analysis described below, the shape of each of the distal end faces of the protrusions 23a and 27a was set to a square of 3 mm (A = 3 mm), and the distance B between adjacent protrusions was set to 4.5 mm. The protrusion pattern 23 of the upper tool 21 and the protrusion pattern 27 of the lower tool 25 were provided so that the protrusions 23a and 27a did not face each other. Specifically, as shown in FIG. 12(b), the positions of the protrusion 23a of the upper tool 21 and the protrusion 27a of the lower tool 25 were set so as to be shifted from each other in the lateral direction on the paper surface and the longitudinal direction on the paper surface. The distance d between the lower face of the protrusion 23a of the upper tool 21 and the upper face of the protrusion 27a of the lower tool 25 at the bottom dead center was 0.36 mm. Since the sheet thickness t of the blank of the present example is 1.2 mm as in the embodiment, the relationship between the distance d and the sheet thickness t of the blank is d = 0.3 t.

In the present example, the above protrusion patterns 23 and 27 were provided to the portion corresponding to the countermeasure required portion in the predetermined tool model, and the similar analysis as in the reference press formed part shape acquisition step S1 to the second amount of deviation acquisition step S9 was performed using the tool model (protrusion pattern providing tool model).

The amount of change in the reference press formed part shape 31 when performing press forming analysis on the flat blank model 3 (see FIG. 3) using the protrusion pattern providing tool model was 1.29 mm at the portion A as described with reference to FIG. 13. The amount of change in the reference press formed part shape 31 was 0.07 mm at the portion B. The amount of change in the reference press formed part shape 31 was 6.50 mm at the portion C. The amount of change in the reference press formed part shape 31 was 2.10 mm at the portion D. The amount of change in the reference press formed part shape 31 was 1.80 mm at the portion E.

The amount of change in the wave-shaped blank press formed part shape 35 when performing press forming analysis on the wave-shaped blank model 7 (see FIG. 5) using the protrusion pattern providing tool model was 1.45 mm at the portion A as described with reference to FIG. 14. The amount of change in the wave-shaped blank press formed part shape 35 was 0.12 mm at the portion B. The amount of change in the wave-shaped blank press formed part shape 35 was 6.50 mm at the portion C. The amount of change in the wave-shaped blank press formed part shape 35 was 2.03 mm at the portion D. The amount of change in the wave-shaped blank press formed part shape 35 was 2.05 mm at the portion E.

The first amount of deviation obtained by comparing the reference press formed part shape 31 (FIG. 13) and the wave-shaped blank press formed part shape 35 (FIG. 14) was 0.16 mm at the portion A as described with reference to FIG. 15. The first amount of deviation was 0.05 mm at the portion B. The first amount of deviation was 0.00 mm at the portion C. The first amount of deviation was -0.07 mm at the portion D. The first amount of deviation was 0.25 mm at the portion E.

FIG. 23 is a diagram illustrating a periodically deviated wave-shaped blank press formed part shape 51 obtained by performing press forming analysis on the periodically deviated wave-shaped blank model 41 (see FIG. 19) using the protrusion pattern providing tool model. As illustrated in FIG. 23, the amount of change of the portion A of the periodically deviated wave-shaped blank press formed part shape 51 in the case of using the protrusion pattern providing tool model was 1.19 mm. The amount of change of the portion B of the periodically deviated wave-shaped blank press formed part shape 51 was 0.20 mm. The amount of change of the portion C of the periodically deviated wave-shaped blank press formed part shape 51 was 6.44 mm. The amount of change of the portion D of the periodically deviated wave-shaped blank press formed part shape 51 was 1.98 mm. The amount of change of the portion E of the periodically deviated wave-shaped blank press formed part shape 51 was 1.82 mm.

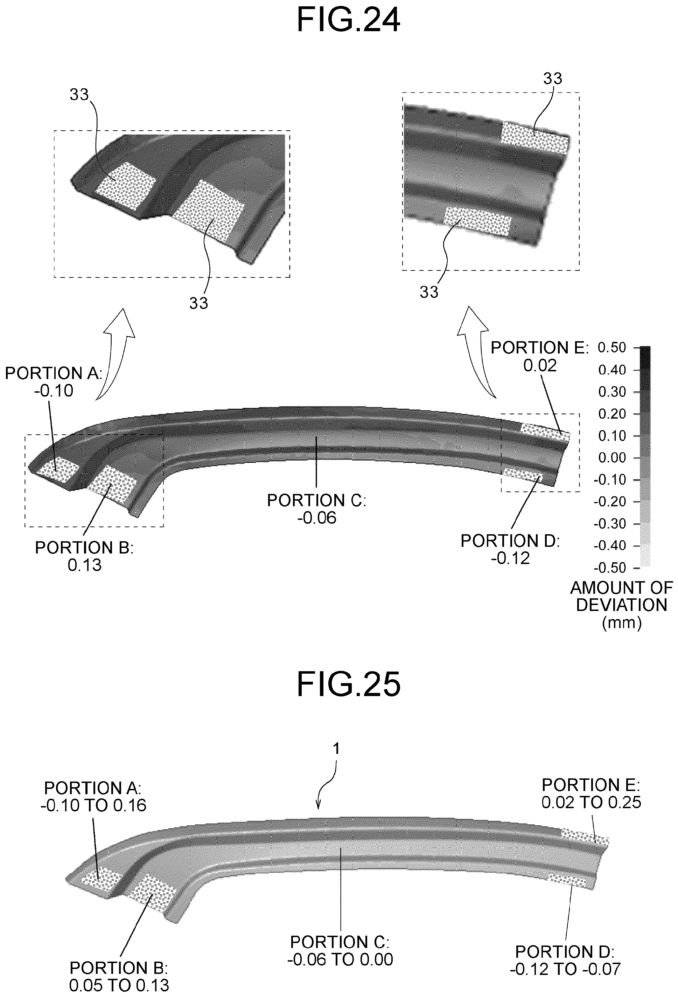

FIG. 24 is a diagram illustrating a second amount of deviation obtained by comparing the reference press formed part shape 31 (FIG. 13) with the periodically deviated wave-shaped blank press formed part shape 51 (FIG. 23). As illustrated in FIG. 24, the second amount of deviation between the reference press formed part shape 31 and the periodically deviated wave-shaped blank press formed part shape 51 in the case of using the protrusion pattern providing tool model was -0.10 mm at the portion A. The second amount of deviation was 0.13 mm at the portion B. The second amount of deviation was -0.06 mm at the portion C. The second amount of deviation was -0.12 mm at the portion D. The second amount of deviation was 0.02 mm at the portion E.

FIG. 25 is a diagram illustrating both the first amount of deviation in FIG. 15 and the second amount of deviation in FIG. 24 in association with the press formed part 1 (target shape). As illustrated in FIG. 25, the amount of deviation in the case of using the protrusion pattern providing tool model was -0.10 mm to 0.16 mm at the portion A. The amount of deviation was 0.05 mm to 0.13 mm at the portion B. The amount of deviation was -0.06 mm to 0.00 mm at the portion C. The amount of deviation was - 0.12 mm to -0.07 mm at the portion D. The amount of deviation was 0.02 mm to 0.25 mm at the portion E. The amount of deviation in FIG. 25 is significantly smaller than the amount of deviation before the countermeasure illustrated in FIG. 22. Therefore, it has been confirmed that there is an effect of reducing the influence of the shape variation of the blank by providing the protrusion pattern to the tool corresponding to the countermeasure required portion.

Therefore, in the protrusion pattern providing step S13, the protrusion patterns 23 and 27 similar to those of the above protrusion pattern providing tool model were provided to the surface of the actual tool. Specifically, the protrusion patterns 23 and 27 were provided to the portion, of the tool, for forming the countermeasure required portion in the present example or the countermeasure required portion and its periphery. In the actual press forming step S15, the actual blank having the shape variation was press formed using the actual tool provided with the above protrusion patterns 23 and 27. As the actual blank, a 1.5 GPa-class steel sheet having a sheet thickness of 1.2 mm corresponding to the above-described blank model was used.

In the present example, the shape of the press formed part press formed in the actual press forming step S15, influence of the shape variation of the blank was small as in the analysis result of FIG. 25, and good dimensional accuracy was obtained.

### Industrial Applicability

In the present invention, it is possible to provide a press formed part manufacturing method that reduces the influence of the shape variation of the blank.

### Reference Signs List

1 PRESS FORMED PART (TARGET SHAPE)
3 FLAT BLANK MODEL
5 REFERENCE PRESS FORMED PART SHAPE (USING PREDETERMINED TOOL MODEL)
7 WAVE-SHAPED BLANK MODEL
9 WAVE-SHAPED BLANK PRESS FORMED PART SHAPE (USING PREDETERMINED TOOL MODEL)
11 PERIODICALLY DEVIATED WAVE-SHAPED BLANK MODEL
13 PERIODICALLY DEVIATED WAVE-SHAPED BLANK PRESS FORMED PART SHAPE (USING PREDETERMINED TOOL MODEL)
21 UPPER TOOL
21a FLAT FACE
23 PROTRUSION PATTERN (UPPER TOOL)
23a PROTRUSION
25 LOWER TOOL
25a FLAT FACE
27 PROTRUSION PATTERN (LOWER TOOL)
27a PROTRUSION
31 REFERENCE PRESS FORMED PART SHAPE (USING PROTRUSION PATTERN PROVIDING TOOL MODEL)
33 STRAIN PROVIDED REGION
35 WAVE-SHAPED BLANK PRESS FORMED PART SHAPE (USING PROTRUSION PATTERN PROVIDING TOOL MODEL)
37 PERIODICALLY DEVIATED WAVE-SHAPED BLANK PRESS FORMED PART SHAPE (USING PROTRUSION PATTERN PROVIDING TOOL MODEL)
41 PERIODICALLY DEVIATED WAVE-SHAPED BLANK MODEL (EXAMPLE)
43 PERIODICALLY DEVIATED WAVE-SHAPED BLANK PRESS FORMED PART SHAPE (USING PREDETERMINED TOOL MODEL)
51 PERIODICALLY DEVIATED WAVE-SHAPED BLANK PRESS FORMED PART SHAPE (USING PROTRUSION PATTERN PROVIDING TOOL MODEL)

## Claims

1. A press formed part manufacturing method for reducing an influence of a shape variation of a blank in a press formed part obtained by press forming the blank collected from a metal sheet having a shape variation, the method comprising:
a reference press formed part shape acquisition step of performing press forming analysis when press forming is performed with a predetermined tool model using a flat blank model having a flat shape, and acquiring a press formed part shape after tool release as a reference press formed part shape;
a wave-shaped blank press formed part shape acquisition step of generating a wave-shaped blank model having a wave shape with a predetermined wavelength and a predetermined amplitude corresponding to the shape variation, performing press forming analysis when press forming is performed with the predetermined tool model using the generated wave-shaped blank model, and acquiring a press formed part shape after tool release as a wave-shaped blank press formed part shape;
a first amount of deviation acquisition step of comparing the reference press formed part shape with the wave-shaped blank press formed part shape to obtain a portion where both shapes are deviated from each other and an amount of deviation;
a periodically deviated wave-shaped blank press formed part shape acquisition step of generating one type or a plurality of types of periodically deviated wave-shaped blank models each having a wave shape whose amplitude and wavelength are the same as an amplitude and a wavelength of a wave shape of the wave-shaped blank model and whose period is deviated from a period of the wave shape of the wave-shaped blank model, performing press forming analysis when press forming is performed with the predetermined tool model using the generated periodically deviated wave-shaped blank models, and acquiring a press formed part shape after tool release as a periodically deviated wave-shaped blank press formed part shape;
a second amount of deviation acquisition step of comparing the reference press formed part shape with one type or a plurality of types of the periodically deviated wave-shaped blank press formed part shapes to obtain a portion where both shapes are deviated from each other and an amount of deviation;
a countermeasure required portion identification step of identifying, as a countermeasure required portion, a portion of the press formed part corresponding to a portion where an amount of deviation exceeding a threshold value has occurred in the first amount of deviation acquisition step and a portion where an amount of deviation exceeding a threshold value has occurred in the second amount of deviation acquisition step;
a protrusion pattern providing step of providing a protrusion pattern to a portion, of an upper tool and a lower tool of an actual tool for forming the press formed part, for forming the countermeasure required portion or the countermeasure required portion and a periphery thereof; and
an actual press forming step of press forming the blank using the upper tool and the lower tool provided with the protrusion pattern.

2. The press formed part manufacturing method according to claim 1, wherein
the first amount of deviation acquisition step includes
acquiring, as the amount of deviation, a difference between a spring back amount at a predetermined portion in the reference press formed part shape and a spring back amount at a portion same as the predetermined portion in the reference press formed part shape in the wave-shaped blank press formed part shape, and
the second amount of deviation acquisition step includes
acquiring, as the amount of deviation, a difference between a spring back amount at a predetermined portion in the reference press formed part shape and a spring back amount at a portion same as the predetermined portion in the reference press formed part shape in the periodically deviated wave-shaped blank press formed part shape.

3. The press formed part manufacturing method according to claim 1 or 2, wherein
the protrusion pattern includes a plurality of protrusions formed at predetermined intervals on a flat face or a curved face, a length A of each of a vertical length and a horizontal length of each of the protrusions is set to 3 mm or more and 50 mm or less, and a distance between adjacent protrusions is set to 1.2A or more and 2.0A or less,
the protrusion pattern providing step includes providing the upper tool and the lower tool with the protrusion pattern so that a protrusion of the upper tool faces a flat face or a curved face of the lower tool and a protrusion of the lower tool faces a flat face or a curved face of the upper tool, and
the actual press forming step includes performing press forming so that a distance between a lower face of the protrusion of the upper tool and an upper face of the protrusion of the lower tool at a bottom dead center when the blank having a sheet thickness t (mm) is formed is 0.1 t or more and 0.5 t or less.

## Patentansprüche

1. Verfahren zur Herstellung eines Pressformteils zur Verringerung des Einflusses einer Formabweichung eines Rohlings in einem Pressformteil, das durch Pressformen des Rohlings erhalten wird, der aus einem Metallblech mit einer Formabweichung entnommen wurde, wobei das Verfahren umfasst:
einen Schritt zum Ermitteln einer Pressformteil-Referenzform, bei dem eine Pressformanalyse durchgeführt wird, wenn das Pressformen mit einem vorbestimmten Werkzeugmodell unter Verwendung eines flachen Rohlingmodells mit einer flachen Form durchgeführt wird, und bei dem eine Pressformteilform nach dem Entformen als Pressformteil-Referenzform erfasst wird;
einen Schritt zum Ermitteln einer Pressformteilform aus einem wellenförmigem Rohling, bei dem ein wellenförmiges Rohlingmodell mit einer Wellenform, die einer vorbestimmten Wellenlänge und einer vorbestimmten Amplitude entsprechend der Formabweichung entspricht, erzeugt wird, eine Pressformanalyse durchgeführt wird, wenn das Pressformen mit dem vorbestimmten Werkzeugmodell unter Verwendung des erzeugten wellenförmigen Rohlingmodells erfolgt, und eine Pressformteilform nach Entformen als Pressformteilform aus dem wellenförmigem Rohling erfasst wird;
einen Schritt zum Ermitteln eines ersten Abweichungsbetrags des Vergleichens der Pressformteil-Referenzform mit der Pressformteilform aus dem wellenförmigen Rohling, um einen Abschnitt, in dem beide Formen voneinander abweichen, und einen Abweichungsbetrag zu ermitteln;
einen Schritt zum Ermitteln einer Pressformteilform aus einem periodisch abweichenden wellenförmigen Rohling, bei dem ein oder eine Vielzahl von Typen von periodisch abweichenden wellenförmigen Rohlingmodellen erzeugt werden, die jeweils eine Wellenform aufweisen, deren Amplitude und Wellenlänge mit der Amplitude und Wellenlänge einer Wellenform des wellenförmigen Rohlingmodells übereinstimmen und deren Periode von der Periode der Wellenform des wellenförmigen Rohlingmodells abweicht, eine Pressformungsanalyse ausgeführt wird, wenn das Pressformen mit dem vorbestimmten Werkzeugmodell unter Verwendung der erzeugten periodisch abweichenden wellenförmigen Rohlingmodelle durchgeführt wird, und eine Pressformteilform nach dem Entformen als periodisch abweichende wellenförmige Pressformteilform erfasst wird;
einen Schritt zum Ermitteln eines zweiten Abweichungsbetrags, bei dem die Pressformteil-Referenzform mit einem oder einer Vielzahl von Typen der Pressformteilformen aus dem periodisch abweichenden wellenförmigen Rohling verglichen wird, um einen Abschnitt, in dem beide Formen voneinander abweichen, sowie einen Abweichungsbetrag zu ermitteln;
einen Schritt zur Identifizierung eines Abschnitts, der eine Gegenmaßnahme erfordert, bei dem als Abschnitt, der eine Gegenmaßnahme erfordert, ein Abschnitt des Pressformteils identifiziert wird, der einem Abschnitt entspricht, bei dem in dem Schritt zur Ermittlung des ersten Abweichungsbetrags ein Abweichungsbetrag aufgetreten ist, der einen Schwellenwert überschreitet, sowie einem Abschnitt, bei dem in dem Schritt zur Ermittlung des zweiten Abweichungsbetrags ein Abweichungsbetrag aufgetreten ist, der einen Schwellenwert überschreitet;
einen Schritt zum Bereitstellen eines Vorsprungsmusters, bei dem ein Vorsprungsmuster an einem Abschnitt eines Oberwerkzeugs und eines Unterwerkzeugs eines tatsächlichen Werkzeugs zum Formen des Pressteils bereitgestellt wird, um den Abschnitt, der eine Gegenmaßnahme erfordert, oder den Abschnitt der eine Gegenmaßnahme erfordert und dessen Umfang zu formen; und
einen Schritt des tatsächlichen Pressformens, bei dem der Rohling unter Verwendung des mit dem Vorsprungsmuster versehenen Oberwerkzeugs und Unterwerkzeugs pressgeformt wird.

2. Verfahren zum Herstellen eines Pressformteils nach Anspruch 1, bei dem der Schritt zum Ermitteln des ersten Abweichungsbetrags umfasst:
Ermitteln, als Abweichungsbetrag, einer Differenz zwischen einem Rückfederungsbetrag an einem vorbestimmten Abschnitt in der Pressformteil-Referenzform und einem Rückfederungsbetrag an einem Abschnitt, der mit dem vorbestimmten Abschnitt in der Pressformteil-Referenzform identisch ist, in der Pressformteilform aus dem wellenförmigen Rohling, und
der zweite Schritt zum Ermitteln des Abweichungsbetrags umfasst:
Ermitteln, als Abweichungsbetrag, einer Differenz zwischen einem Rückfederungsbetrag an einem vorbestimmten Abschnitt in der Pressformteil-Referenzform und einem Rückfederungsbetrag an einem Abschnitt, der dem vorbestimmten Abschnitt in der Pressformteil-Referenzform entspricht, in der Pressformteilform des periodisch abweichenden wellenförmigen Rohlings.

3. Verfahren zum Herstellen eines Pressformteils nach Anspruch 1 oder 2, bei dem
das Vorsprungsmuster eine Vielzahl von Vorsprüngen umfasst, die in vorbestimmten Abständen auf einer ebenen Fläche oder einer gekrümmten Fläche ausgebildet sind, eine Länge A einer vertikalen Länge und einer horizontalen Länge jedes der Vorsprünge auf 3 mm oder mehr und 50 mm oder weniger festgelegt ist, und ein Abstand zwischen benachbarten Vorsprüngen auf 1,2 A oder mehr und 2,0 A oder weniger festgelegt ist,
der Schritt zum Bereitstellen des Vorsprungsmusters das Bereitstellen des Vorsprungsmusters an dem Oberwerkzeug und dem Unterwerkzeug umfasst, so dass ein Vorsprung des Oberwerkzeugs einer flachen Fläche oder einer gekrümmten Fläche des Unterwerkzeugs zugewandt ist und ein Vorsprung des Unterwerkzeugs einer flachen Fläche oder einer gekrümmten Fläche des Oberwerkzeugs zugewandt ist, und
der eigentliche Pressformungsschritt das Durchführen des Pressformens umfasst, so dass ein Abstand zwischen einer Unterseite des Vorsprungs des Oberwerkzeugs und einer Oberseite des Vorsprungs des Unterwerkzeugs in dem unteren Totpunkt, wenn der Rohling mit einer Blechdicke t (mm) geformt wird, 0,1 t oder mehr und 0,5 t oder weniger beträgt.

## Revendications

1. Procédé de fabrication d'une pièce formée à la presse pour réduire une influence d'une variation de forme d'une ébauche dans une pièce formée à la presse obtenue par formage à la presse de l'ébauche prélevée dans une tôle métallique présentant une variation de forme, le procédé comprenant :
une étape d'acquisition d'une forme de référence de pièce formée à la presse consistant à effectuer une analyse de formage à la presse lorsqu'un formage à la presse est effectué avec un modèle d'outil prédéterminé en utilisant un modèle d'ébauche plat ayant une forme plate, et à acquérir une forme de pièce formée à la presse après libération de l'outil en tant que forme de référence de pièce formée à la presse ;
une étape d'acquisition d'une forme de pièce formée à la presse à ébauche de forme ondulée consistant à générer un modèle d'ébauche de forme ondulée ayant une forme ondulée avec une longueur d'onde prédéterminée et une amplitude prédéterminée correspondant à la variation de forme, à effectuer une analyse de formage à la presse lorsqu'un formage à la presse est effectué avec le modèle d'outil prédéterminé en utilisant le modèle d d'ébauche de forme ondulée généré, et à acquérir une forme de pièce formée à la presse après libération de l'outil en tant que forme de pièce formée à la presse à ébauche de forme ondulée ;
une étape d'acquisition d'une première quantité d'écart consistant à comparer la forme de référence de pièce formée à la presse avec la forme de pièce formée à la presse à ébauche de forme ondulée afin d'obtenir une partie où les deux formes s'écartent l'une de l'autre et une quantité d'écart ;
une étape d'acquisition d'une forme de pièce formée à la presse à ébauche de forme ondulée à écart périodique consistant à générer un type ou une pluralité de types de modèles d'ébauche de forme ondulée à écart périodique ayant chacun une forme ondulée dont l'amplitude et la longueur d'onde sont identiques à une amplitude et à une longueur d'onde d'une forme ondulée du modèle d'ébauche de forme ondulée, et
dont la période s'écarte d'une période de la forme ondulée du modèle d'ébauche de forme ondulée, à effectuer une analyse de formage à la presse lorsqu'un formage à la presse est effectué avec le modèle d'outil prédéterminé en utilisant les modèles d'ébauche de forme ondulée à écart périodique générés, et à acquérir une forme de pièce formée à la presse après libération de l'outil en tant que forme de pièce formée à la presse à ébauche de forme ondulée à écart périodique ;
une étape d'acquisition d'une seconde quantité d'écart consistant à comparer la forme de référence de pièce formée à la presse avec un type ou une pluralité de types des formes de pièce formée à la presse à ébauche de forme ondulée à écart périodique afin d'obtenir une partie où les deux formes s'écartent l'une de l'autre et une quantité d'écart ;
une étape d'identification de partie nécessitant une contre-mesure consistant à identifier, en tant que partie nécessitant une contre-mesure, une partie de la pièce formée à la presse correspondant à une partie où une quantité d'écart dépassant une valeur seuil s'est produite lors de l'étape d'acquisition d'une première quantité d'écart,
et une partie où une quantité d'écart dépassant une valeur seuil s'est produite lors de l'étape d'acquisition d'une seconde quantité d'écart ;
une étape de fourniture de motif de saillies consistant à fournir un motif de saillies à une partie, d'un outil supérieur et d'un outil inférieur d'un outil réel destiné à former la pièce formée à la presse, pour former la partie nécessitant une contre-mesure ou la partie nécessitant une contre-mesure et sa périphérie ; et
une étape de formage à la presse réel consistant à former à la presse l'ébauche en utilisant l'outil supérieur et l'outil inférieur pourvus du motif de saillies.

2. Procédé de fabrication d'une pièce formée à la presse selon la revendication 1, dans lequel :
l'étape d'acquisition d'une première quantité d'écart comporte
l'acquisition, en tant que quantité d'écart, d'une différence entre une quantité de rappel élastique au niveau d'une partie prédéterminée dans la forme de référence de pièce formée à la presse et une quantité de rappel élastique au niveau d'une partie identique à la partie prédéterminée dans la forme de référence de pièce formée à la presse dans la forme de pièce formée à la presse à ébauche de forme ondulée ; et
l'étape d'acquisition d'une seconde quantité d'écart comporte
l'acquisition, en tant que quantité d'écart, d'une différence entre une quantité de rappel élastique au niveau d'une partie prédéterminée dans la forme de référence de pièce formée à la presse et une quantité de rappel élastique au niveau d'une partie identique à la partie prédéterminée dans la forme de référence de pièce formée à la presse dans la forme de pièce formée à la presse à ébauche de forme ondulée à écart périodique.

3. Procédé de fabrication d'une pièce formée à la presse selon la revendication 1 ou 2, dans lequel
le motif de saillies comporte une pluralité de saillies formées à des intervalles prédéterminés sur une face plate ou une face incurvée, une longueur A de chacune d'une longueur verticale et d'une longueur horizontale de chacune des saillies est établie à 3 mm ou plus et à 50 mm ou moins, et une distance entre des saillies adjacentes est établie à 1,2A ou plus et à 2,0A ou moins ;
l'étape de fourniture de motif de saillies comporte la fourniture du motif de saillies sur l'outil supérieur et l'outil inférieur de sorte qu'une saillie de l'outil supérieur fait face à une face plate ou une face incurvée de l'outil inférieur et qu'une saillie de l'outil inférieur fait face à une face plate ou une face incurvée de l'outil supérieur ; et
l'étape de formage à la presse réel comporte la réalisation d'un formage à la presse de sorte qu'une distance, au point mort bas, entre une face inférieure de la saillie de l'outil supérieur et une face supérieure de la saillie de l'outil inférieur lors de la formation de l'ébauche ayant une épaisseur de tôle t (mm), est de 0,1 t ou plus et de 0,5 t ou moins.
